Europäisches Patentamt

European Patent Office

Office européen des brevets

(19)

(11) Numéro de publication: **0 143 866 B1**

(12) # FASCICULE DE BREVET EUROPEEN

(45) Date de publication du fascicule du brevet:
**15.07.87**

(51) Int. Cl.⁴: **F 16 L 25/00, F 01 N 7/08**

(21) Numéro de dépôt: **83402316.0**

(22) Date de dépôt: **02.12.83**

(54) **Collier de serrage pour tuyaux.**

(43) Date de publication de la demande:
**12.06.85 Bulletin 85/24**

(45) Mention de la délivrance du brevet:
**15.07.87 Bulletin 87/29**

(84) Etats contractants désignés:
**BE DE GB IT NL**

(56) Documents cités:
**FR - A - 2 491 163**
**FR - A - 2 536 127**
**GB - A - 1 511 094**
**US - A - 4 229 863**
**US - A - 4 372 017**

(73) Titulaire: **ETABLISSEMENTS CAILLAU, 4, rue Béranger,
F-92100 Boulogne-Billancourt (FR)**

(72) Inventeur: **Calmettes, Lionel, 3, rue des Glycines,
F-77330 Ozoir-la-Ferriere (FR)**

(74) Mandataire: **Descourtieux, Philippe et al, CABINET
BEAU de LOMENIE 55 rue d'Amsterdam, F-75008 Paris
(FR)**

## Description

On a décrit dans le brevet FR-A-2 941 163 collier de serrage, notamment pour tuyaux d'échappement de véhicules automobiles, comprenant un cavalier en forme d'étrier à branches divergentes et une bride incurvée dont les extrémités en forme de chapes ouvertes latéralement constituent des logements pour lesdites branches du cavalier. Ces dernières possèdent à leur extrémité des butées, dont l'une au moins est réglable, permettant ainsi un serrage du collier par coulissement de l'une au moins desdites chapes sur la branche correspondante du cavalier.

Bien que l'utilisation du collier décrit au brevet précité donne toute satisfaction, la fabrication de la bride s'est révélée relativement onéreuse. En effet, compte tenue des formes et des particularités de cette bride, telle qu'elle est décrite au brevet précité, il est nécessaire de procéder d'abord à une première opération, en général par matriçage, c'est-à-dire par forgeage à froid, pour obtenir la partie médiane et une ébauche des deux chapes terminales.

Un usinage ultérieur permet alors de réaliser le lamage des faces terminales des chapes venant en contact avec les butées des extrémités du cavalier et, plus particuliérement, les talons ou reliefs généralement prévus sur ces faces terminales.

Cette opération de reprise d'usinage de la bride est bien évidemment coûteuse et il a paru intéressant de chercher à la supprimer sans pour autant risquer de diminuer l'efficacité et la sûreté du serrage important susceptible d'être obtenu au moyen du collier dans les conditions déjà décrites au brevet précité.

A cet effet, selon l'invention, le plan $P_1$ perpendiculaire à l'axe du collier et passant par le centre de gravité de la partie médiane incurvée de la bride est décalé par rapport au plan $P_2$ défini par les axes des branches du cavalier lorsqu'elles occupent leur position normale, au moment du serrage, dans les chapes prévues aux extrémités de la bride. Le décalage dudit plan $P_1$ par rapport audit plan $P_2$ est orienté dans le même sens que celui partant du fond des chapes vers leur ouvertures latérale.

Grâce à cette disposition, il est possible de réaliser la bride et, plus particulièrement, ses chapes en une seule opération, dite de cambrage, analogue à un emboutissage, à partir d'un flan de tôle découpée d'épaisseur convenable. Les faces terminales des chapes sont, dès la fin de l'opération de cambrage, aptes à prendre appui sur les butées du cavalier. En outre — et ceci justifie déjà l'intérêt de l'invention — le décalage des plans $P_1$ et $P_2$ évite tout échappement des butées au début du serrage du collier, éliminant ainsi la nécessité des talons de retenue sur les faces terminales des chapes de la bride.

L'invention sera mieux comprise et diverses caractéristiques secondaires apparaîtront au cours de la description qui va suivre d'un mode de réalisation avantageux, en référence au dessin annexé dans lequel:

la figure 1 est une vue d'extrémité du collier adapté autour de tuyaux;

la figure 2 est une vue de dessus correspondant à la figure 1, les butées du cavalier ayant toutefois été enlevées.

On désignera par les références déjà utilisées dans le brevet précité les éléments du collier qui y sont déjà décrits et qui ne sont pas modifiés par la présente invention; les références des éléments modifiés seront au contraire affectées de l'indice «'» (prime).

Si l'on se reporte au dessin, on voit que le collier comporte un cavalier 1 dont les branches divergentes 13 présentent des butées 3 et 5, l'une au moins d'entre elles et, de préférence, les deux étant constituées par un écrou coopérant avec un filetage de l'extrémité de la branche correspondante.

La bride 2' comporte une partie médiane 8' et deux chapes 9' présentant des ouvertures latérales 9a, sur lesquelles les butées 3 et 5 peuvent prendre appui.

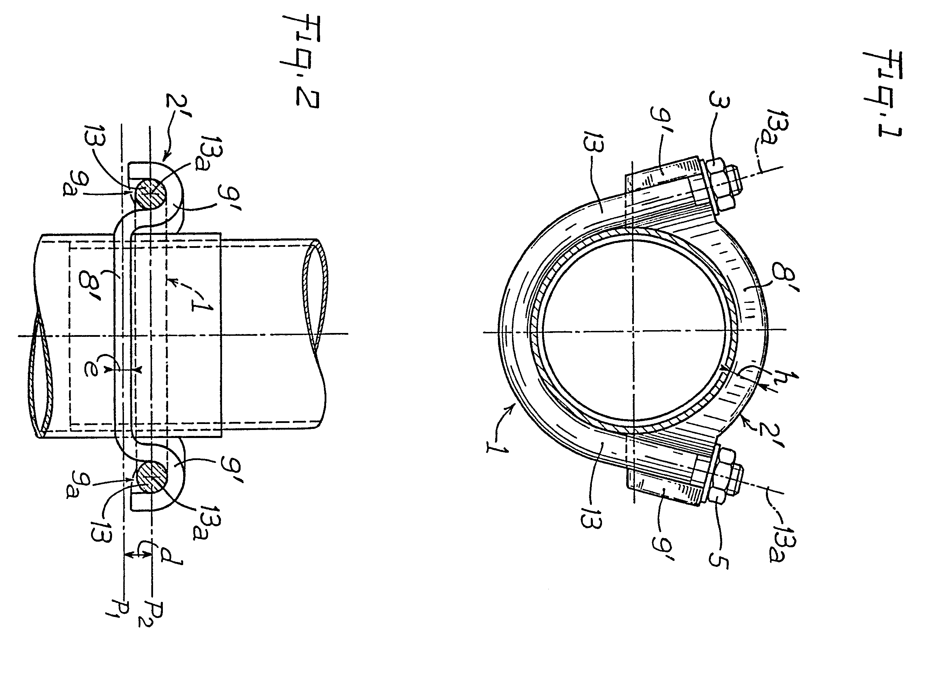

On considère maintenant le plan $P_1$ perpendiculaire à l'axe du collier et des tuyaux à serrer et passant par le centre de gravité de la partie médiane 8' de la bride 2'. Pratiquement le plan $P_1$ est le plan transversal de symétrie de la partie médiane 8'. Ainsi qu'on le voit bien sur la figure 2, ce plan $P_1$ est décalé d'une distance orientée $\underline{d}$ par rapport au plan $P_2$ défini par les axes 13a des branches 13 du cavalier 1, c'est-à-dire pratiquement le plan transversal de symétrie du cavalier. Il faut cependant noter que le décalage $\underline{d}$ est considéré lorsque les branches 13 du cavalier occupent leur position normale, au moment du serrage, dans les chapes 9' et que ce décalage est orienté dans le même sens que celui qui va du fond des chapes 9' vers leur ouverture latérale 9a.

La mise en place du collier s'effectue de la façon déjà décrite au brevet précité mais, grâce aux dispositions qui viennent d'être précitées, on ne risque aucun échappement de la bride au début du serrage malgré l'absence de tout talon de retenue coopérant avec les butées du cavalier.

Comme on l'a déjà signalé, la forme de la bride 2' s'accomode d'une fabrication par cambrage ou emboutissage à partir d'un flan de tôle, de sorte que la section droite de la partie médiane 8' est rectangulaire ou sensiblement rectangulaire. Toutefois, ainsi que l'on s'en rend compte sur le dessin, l'épaisseur $\underline{e}$ de la partie médiane 8' est nettement inférieure à sa dimension radiale $\underline{h}$, ce qui favorise aussi bien la robustesse et la déformabilité souhaitables de la bride qu'une surface limitée de contact avec le tuyau extérieur à serrer. Les avantages de ces deux dernières caractéristiques ont été exposés dans le brevet précité et il apparaît inutile de les préciser à nouveau.

## Revendications

1. Collier de serrage pour tuyaux, notamment pour tuyaux d'échappement de véhicules automobiles, comprenant un cavalier (1) en forme d'étrier à branches (13) divergentes, des butées (3, 5) étant prévues vers les extrémités des branches de ce cavalier, l'une au moins de ces butées étant constituée par un écrou (5) vissé sur un filetage (4) de la branche du cavalier, et une bride (2') présentant une partie médiane (8'), de forme incurvée, munie vers ses extrémités de chapes (9') ouvertes latéralement et prenant appui sur les butées dextrémité (3, 5) des branches (13) du cavalier (1), caractérisé en ce que le plan (P₁) perpendiculaire à l'axe du collier et passant par le centre de gravité de la partie médiane incurvée (8') de la bride (2') est décalé par rapport au plan (P₂) défini par les axes (13a) des branches (13) du cavalier (1) lorsqu'elles occupent leur position normale, au moment du serrage, dans les chapes (9') prévues aux extrémités de la bride (2'), le décalage dudit plan (P₁), par rapport audit plan (P₂) étant orienté dans le même sens que celui partant du fond des chapes (9') vers leur ouverture latérale (9a).

2. Collier de serrage selon la revendication 1, caractérisé en ce que la partie médiane (8') de la bride (2') présente une section droite rectangulaire ou sensiblement rectangulaire, l'épaisseur de cette partie étant de préférence inférieure à sa dimension radiale.

**Patentansprüche**

1. Spannschelle für Rohre, insbesondere für Auspuffrohre von Kraftfahrzeugen mit einer rahmenförmigen Klammer (1) mit auseinanderlaufenden Armen (13), wobei Anschläge (3, 5) an den Enden der Arme dieser Klammer vorgesehen sind, wobei mindestens einer dieser Anschläge aus einer Schraubenmutter (5) besteht, die auf ein Gewinde (4) des Armes der Klammer geschraubt und mit einem Flansch (2'), der einen gekrümmten Mittenbereich (8') aufweist und an seinen Enden mit seitlich offenen Gabeln (9') versehen ist, wobei der Flansch auf den Anschlägen an den Enden (3, 5) der Arme (13) der Klammer (1) aufliegt, dadurch gekennzeichnet, dass die Ebene (P₁), die senkrecht zu der Achse der Schelle und durch den Schwerpunkt des mittleren gekrümmten Bereichs (8') des Flansches (2) verläuft, gegenüber der Ebene (P₂) versetzt ist, die durch die Achsen (13a) der Arme (13) der Klammer (1) verlaufen, während diese ihre normale Lage zum Zeitpunkt des Spannens in den Gabeln (9') einnehmen, die an den Enden des Flansches (2') vorgesehen sind, wobei die Versetzung der Ebene (P₁) im Verhältnis zur Ebene (P₂) in derselben Richtung orientiert ist wie die Versetzung, die vom Boden der Gabeln (9') zu ihrer seitlichen Öffnung hin (9a) verläuft.

2. Spannschnellen nach Anspruch 1, dadurch gekennzeichnet, dass der mittlere Bereich (8') des Flansches (2') einen geraden rechteckigen oder im wesentlichen rechteckigen Bereich aufweist, wobei die Dicke dieses Mittenbereichs vorzugsweise kleiner ist als dessen radiale Ausnahme.

**Claims**

1. Clamp for pipes, and in particular for motor-vehicule exhaust pipes, comprising a stirrup-shaped piece (1) with divergent branches (13), stop members (3, 5) being provided towards the ends of the branches of said stirrup piece, one at least of said stop members being constituted by a nut (5) screwed on a threading (4) provided on the branch of the stirrup piece, and a collar (2') having an incurved middle part (8'), provided at its ends with yokes (9') open laterally and resting over the stop members (3, 5) provided on the ends of the branches (13) of the stirrup piece (1), characterized in that the plane (P₁) perpendicular to the axis of the clamp and traversing the center of gravity of the incurved middle part (8') of the collar (2') is offset with respect to the plane (P₂) defined by the axes (13a) of the branches (13) of the stirrup piece (1) when these occupy their normal position, at clamping time, in the yokes (9') provided on the ends of the collar (2'), the offsetting of said plane (P₁) with respect to said plane (P₂) being oriented in the same way as that starting from the bottom of the yokes (9') towards their side opening (9a).

2. Clamp according to claim 1, characterized in that the middle part (8') of the collar (2') has a rectangular or substantially rectangular cross-section, the thickness of said middle part being preferably less than its radial dimension.

Fig.1

Fig.2